# EUROPÄISCHE PATENTSCHRIFT

(11) **EP 1 216 823 B1**
(45) Veröffentlichungstag und Bekanntmachung des Hinweises auf die Patenterteilung: **18.06.2003**
(21) Anmeldenummer: 01125585.8
(22) Anmeldetag: 26.10.2001
(51) Int. Cl.: B32B 27/34, B32B 27/32

(54) **Mehrschichtverbund auf Polyamid/Polyolefin-Basis**
Polyamide/polyolefin-based laminate
Produit multicouche à base de polyamide/polyoléfine

(30) Priorität: 23.12.2000 DE 10065177
(43) Veröffentlichungstag der Anmeldung: 26.06.2002
(73) Patentinhaber: Degussa AG, 40474 Düsseldorf (DE)
(72) Erfinder: Häger, Harald, Dr., 45665 Recklinghausen (DE); Schmitz, Guido, Dr., 48249 Dülmen (DE)

(56) Entgegenhaltungen:
- EP-A- 0 435 787
- EP-A- 1 031 411
- US-A- 5 869 190

## Beschreibung

Gegenstand der Erfindung ist ein Mehrschichtverbund, bei dem eine Polyamidschicht und eine Polyolefinschicht mittels eines speziellen Haftvermittlers miteinander verbunden sind.

Mehrschichtverbunde, die eine Polyamidschicht und eine Polyolefinschicht enthalten, sind an sich bekannt. So wird in der DE-A 37 15 251 ein Zweischichtrohr für die Führung eines alkoholischen Mediums beschrieben, das aus einer Polyamidschicht und einer Polyolefinschicht besteht. Um überhaupt eine Haftung zwischen den Schichten zu erzielen, enthält das Polyolefin Gruppen, die sich von Maleinsäure herleiten.

In der DE-C 40 00 434 wird eine mehrlagige Kühlflüssigkeitsleitung beschrieben, die in einer Ausführungsform aus einer Polyamid-Außenschicht, einer Polyolefin-Innenschicht und einer haftvermittelnden Zwischenschicht aus einem Polyolefin besteht, das funktionelle Gruppen trägt.

Derartige Verbunde weisen nach ihrer Herstellung eine feste Schichtenhaftung auf. Es hat sich aber gezeigt, dass bei längerem Kontakt mit wässrigen Flüssigkeiten oder alkoholhaltigem Kraftstoff, insbesondere in der Wärme, die Schichtenhaftung zwischen funktionalisiertem Polyolefin und Polyamid zusehends geringer wird und schließlich auf Werte abfällt, die in der Praxis nicht mehr akzeptabel sind; als Grund hierfür werden Alkoholyse- bzw. Hydrolysereaktionen angesehen.

Ein anderes Konzept wird in der US 3 561 493 vorgestellt. Dort wird eine Mischung aus Polyamid und Polyethylen als Haftvermittler zwischen einer Polyamid- und einer Polyolefinschicht empfohlen. Die Nacharbeitung zeigt jedoch, dass je nachdem, welches Polymere in der Mischung die kohärente Phase bildet, immer nur eine Haftung entweder zur Polyamidschicht oder zur Polyethylenschicht erhalten wird, nie zu beiden gleichzeitig.

Schließlich wird in der nicht vorveröffentlichten EP-A-1 065 048 ein Mehrschichtverbund beschrieben mit einem Haftvermittler, der ein Polyamin-Polyamid-Copolymer enthält. Eine Polyolefinschicht oder die Anwesenheit eines Polyolefins im Haftvermittler ist dort nicht offenbart.

Die Aufgabe der vorliegenden Erfindung bestand darin, einen Mehrschichtverbund mit einer über einen Haftvermittler verbundenen Polyamid- und einer Polyolefinschicht herzustellen, wobei der Haftvermittler nicht alleine aus einem funktionalisierten Polyolefin besteht. Die Aufgabe bestand weiterhin darin, einen entsprechenden Mehrschichtverbund herzustellen, dessen Schichtenhaftung auch bei längerem Kontakt mit alkoholhaltigen oder wässrigen Medien in der Wärme weitgehend erhalten bleibt.

Diese Aufgabe wurde durch einen Mehrschichtverbund gelöst, der folgende unmittelbar miteinander verbundene Schichten enthält:
I. Eine Schicht I aus einer Polyamid-Formmasse;
II. eine Schicht II aus einem Haftvermittler, der zu mindestens 50 Gew.-%, bevorzugt zu mindestens 70 Gew.-% und besonders bevorzugt zu mindestens 90 Gew.-% aus einer Mischung besteht von
   a) 30 bis 70 Vol.-Teilen von Polymeren, ausgewählt aus
      - einem Polyamid und
      - einem verzweigten Polyamin-Polyamid-Copolymer, das unter Verwendung folgender Monomere hergestellt wird:
         α) 0,1 bis 25 Gew.-%, bevorzugt 0,5 bis 20 Gew.-% und besonders bevorzugt 1 bis 16 Gew.-%, bezogen auf das Polyamin-Polyamid-Copolymer, eines Polyamins mit mindestens 3, bevorzugt mindestens 4, besonders bevorzugt mindestens 8 und insbesondere bevorzugt mindestens 11 Stickstoffatomen und einem zahlenmittleren Molekulargewicht von bevorzugt mindestens 146 g/mol, besonders bevorzugt mindestens 500 g/mol und insbesondere bevorzugt von mindestens 800 g/mol sowie
         β) polyamidbildender Monomere, ausgewählt aus Lactamen, ω-Aminocarbonsäuren und/oder äquimolaren Kombinationen von Diamin und Dicarbonsäure,
   b) 0,1 bis 70 Vol.-Teilen eines Olefinpolymeren, das funktionelle Gruppen enthält,
   c) 69,9 bis 0 Vol.-Teilen eines unfunktionalisierten Polyolefins,
   wobei die Summe der Volumenteile von a), b) und c) 100 ergibt;
III. eine Schicht III aus einer Polyolefin-Formmasse.

Als Polyamid der Schicht I bzw. des Haftvermittlers kommen hierbei in erster Linie aliphatische Homo- und Copolykondensate in Frage, beispielsweise PA 46, PA 66, PA 68, PA 612, PA 88, PA 810, PA 1010, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Die Polyamidformmasse kann entweder eines dieser Polyamide oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere (EP-A-0 295 076), Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadienoder Styrol/Butadien-Kautschuk mit Glastemperaturen T_{g}< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Beim Polyolefin der Schicht III bzw. des Haftvermittlers handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann auch eine Schlagzähkomponente wie z.B. EPM- oder EPDM-Kautschuk oder SEBS enthalten. Darüber hinaus können die üblichen Hilfs- und Zusatzstoffe enthalten sein. Das Polyolefin kann nach jedem bekannten Verfahren hergestellt werden, beispielsweise nach Ziegler-Natta, nach dem Phillips-Verfahren, mittels Metallocenen oder radikalisch.

Die Formmasse der Schicht III kann entsprechend dem Stand der Technik vernetzt werden, um so eine Verbesserung der mechanischen Eigenschaften, z.B. der Kälteschlagzähigkeit, der Wärmeformbeständigkeit oder der Kriechneigung, oder der Permeabilität zu erzielen. Die Vernetzung erfolgt beispielsweise durch Strahlenvernetzung oder mittels Feuchtevernetzung von silangruppenhaltigen Polyolefinformmassen.

Der Haftvermittler der Schicht II enthält neben der Mischung der Komponenten a), b) und c) gegebenenfalls weitere Polymere oder die üblichen Hilfs- und Zusatzstoffe, sofern diese die haftvermittelnde Wirkung nicht nennenswert beeinträchtigen.

Als funktionelle Gruppen, die im Olefinpolymeren der Komponente II.b) enthalten sind, eignen sich z.B. Säureanhydridgruppen, N-Acyllactamgruppen, Carbonsäuregruppen, Epoxidgruppen, Oxazolingruppen, Trialkoxysilangruppen oder Hydroxylgruppen. Die funktionellen Gruppen können hierbei entweder durch Copolymerisation eines geeigneten Monomeren zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

Die Olefinpolymeren bzw. Polyolefine der Komponenten b) und c) können hierbei gleich oder unterschiedlich sein. Beispielsweise kann als Komponente b) ein maleinsäureanhydridfunktionalisierter Ethylen-Propylen-Kautschuk und als Komponente c) ein unfunktionalisiertes isotaktisches Homopolypropylen verwendet werden.

In einer bevorzugten Ausführungsform enthält der Haftvermittler mindestens 0,1 Vol.-Teile des Polyamin-Polyamid-Copolymers und besonders bevorzugt mindestens 0,5 Vol.-Teile. In einer weiteren bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE- OS 196 54 058);
- Dendrimere wie beispielsweise

   ((H₂N-(CH₂)₃)₂N-(CH₂)₃)₂-N(CH₂)₂-N((CH₂)₂-N((CH₂)₃-NH₂)₂)₂

   (DE-A-196 54 179) oder
   Tris(2-aminoethyl)amin, N,N-Bis(2-aminoethyl)-N' ,N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[bis[2-bis(2-aminoethyl)amino]ethyl]amino]ethyl]3,6,9,12,15-pentaazaheptadecan-1,17-diamin (J.M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin-Polyamid-Copolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1,4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, dass das Polyamin-Polyamid-Copolymer einen substantiellen Anteil an Aminogruppen besitzt. Vorzugsweise liegt die Aminogruppenkonzentration des Copolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im Folgenden nicht nur Aminoendgruppen, sondern auch gegebenenfalls vorhandene sekundäre bzw. tertiäre Aminfunktionen des Polyamins verstanden.

Beim Polyamin-Polyamid-Copolymer kann die Zusammensetzung des Polyamidanteils in einem sehr weiten Bereich variieren, da die Verträglichkeit mit dem Polyamid der Schicht I offenbar von anderen Faktoren bestimmt wird und in der Regel gegeben ist.

Die Polyamin-Polyamid-Copolymere können nach verschiedenen Verfahren hergestellt werden.

Eine Möglichkeit besteht darin, die polyamidbildenden Monomere und das Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, dass in einem zweistufigen Prozess zuerst gegebenenfalls die Lactamspaltung und die Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das Polyamin-Polyamid-Copolymere gemäß dem Stand der Technik auch in fester Phase nachkondensiert werden.

Der erfindungsgemäße Mehrschichtverbund kann neben den Schichten I, II und III noch weitere Schichten enthalten, vorausgesetzt diese werden mit den übrigen Schichten haftend verbunden. In Frage kommen hier vor allem Schichten mit guter Sperrwirkung gegenüber Kraftstoffkomponenten, Wasser, Alkoholen, Glykolen oder Gasen. Diese Schichten bestehen insbesondere aus einer Formmasse auf Basis eines thermoplastischen Polyesters (etwa Polybutylenterephthalat, Polyethylen-2.6-naphthalat, Polybutylen-2.6-naphthalat), eines Fluorpolymeren (etwa Polyvinylidenfluorid, ETFE oder THV), eines Ethylen-Vinylalkohol-Copolymeren (EVOH) oder von Polyoxymethylen.

Die Formmassen der Schichten I, II und III können maximal 50 Gew.-% Zusatzstoffe enthalten, die ausgewählt sind aus schlagzähmachendem Kautschuk und/oder üblichen Hilfs- bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben können die Formmassen noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthalten die Formmassen 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Beim erfindungsgemäßen Mehrschichtverbund handelt es sich in einer Ausführungsform um ein Rohr, einen Einfüllstutzen oder um einen Behälter, insbesondere zur Leitung oder Bevorratung von Flüssigkeiten oder Gasen, etwa in Kraftfahrzeugen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke solcher Mehrschichtverbunde sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung, als Kupplungsleitung, als Druckluftbremsleitung, als Scheibenwaschanlagenleitung oder als Kraftstoffbehälter.

Der erfindungsgemäße Mehrschichtverbund kann auch als flächiger Verbund vorliegen, beispielsweise als Folie, etwa als Verpackungsfolie für Lebensmittel.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere wie z.B. Polyanilin oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square, bevorzugt von maximal 10⁶ Ω/square. Die Messmethode zur Bestimmung des Widerstands von mehrschichtigen Rohren ist in der SAE J 2260 (November 1996, Paragraph 7.9) erläutert.

Bei der Ausführung des erfindungsgemäßen Mehrschichtverbundes als Hohlkörper oder Hohlprofil (z. B. Rohr) kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, dass ein vorgefertigter Elastomerschlauch über das fertig extrudierte Mehrschichtrohr geschoben wird.
Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weich gemachtes PVC, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion oder des Coextrusionsblasformens, oder mittels mehrstufiger Verfahren, wie z. B. in der US 5 554 425 beschrieben.

Zur Erhöhung der Berstdruckfestigkeit kann der Verbund zusätzlich dem Stand der Technik entsprechend auch eine textile Verstärkungsschicht enthalten.

Gegenstand der Erfindung sind auch die hier beschriebenen Formmassen der Schicht II. Diese können außer für den erfindungsgemäßen Mehrschichtverbund auch für sich alleine für Formteile jeglicher Art verwendet werden.

Die Erfindung wird im Folgenden beispielhaft erläutert.

### Herstellung eines Polyamin/Polyamid-Copolymers:

4,78 kg Laurinlactam wurden in einem Aufheizkessel bei 180 bis 210 °C aufgeschmolzen und in einen druckfesten Polykondensationskessel überführt. Dann wurden 250 ml Wasser und 57 ppm Hypophosphorige Säure zugegeben. Die Laurinlactamspaltung wurde bei 280 °C unter dem sich einstellenden Eigendruck durchgeführt. Anschließend wurde innerhalb von 3 h auf einen Restwasserdampfdruck von 3 bar entspannt und 230 g Polyethylenimin (LUPASOL® G 100, BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert.

Das erhaltene Copolymer hatte einen Polyethyleniminanteil von 4,5 Gew.-% und einen PA12-Anteil von 95,5 Gew.-%.

### Beispiel 1:

45 Gew.-Teile VESTAMID® ZA7295 (ein hochviskoses PA12 für Extrusionsformmassen mit einem Überschuss an Aminoendgruppen), 40 Gew.-Teile NOVOLEN® 2500H (ein Ethylen-Propylen-Blockcopolymer der Targor GmbH; Extrusionstyp), 10 Gew.-Teile ADMER® Q520E (ein mit Maleinsäureanhydrid gepfropftes isotaktisches Polypropylen der Firma Mitsui) sowie 5 Gew.-Teile des vorstehend hergestellten Polyamin/Polyamid-Copolymers wurden 5 min bei 250 °C in einem Laborkneter der Firma Haake schmelzegemischt.

Aus dem erhaltenen Compound wurde bei 250 °C eine 2 mm starke Platte durch Pressen hergestellt. Entsprechend wurden sowohl aus VESTAMID® ZA7295 als auch aus NOVOLEN® 2500H bei 240 °C je 4 mm starke Platten durch Pressen hergestellt.

Anschließend wurde die Plattenpresse mit folgenden Platten (von unten nach oben) bestückt:
NOVOLEN® 2500H
Compound
VESTAMID® ZA7295.

Der obere Teil der Presse wies eine Temperatur von 240 °C, der untere Teil eine Temperatur von 200 °C auf. Die Presszeit betrug 5 min.

### Haftungsprüfung:

Von Hand war weder eine Ablösung der PA12-Schicht noch der PP-Schicht vom Compound möglich. Bei hoher Gewaltanwendung versagte der Verbund stattdessen durch Materialbruch im Compound.

### Beispiel 2:

45 Gew.-Teile VESTAMID® ZA7295, 40 Gew.-Teile NOVOLEN® 2500H, 10 Gew.-Teile KRATON® FG 1901X (ein maleinsäureanhydridgepropftes SEBS der Firma Shell) sowie 5 Gew.-Teile des vorstehend hergestellten Polyamin/Polyamid-Copolymers wurden 5 min bei 250 °C in einem Laborkneter der Firma Haake schmelzegemischt.

Aus dem erhaltenen Compound wurde bei 250 °C eine 2 mm starke Platte durch Pressen hergestellt. Entsprechend wurden sowohl aus VESTAMID® ZA7295 als auch aus NOVOLEN® 2500H bei 240 °C je 4 mm starke Platten durch Pressen hergestellt. Danach wurden die Platten wie im Beispiel 1 verpresst.

### Haftungsprüfung:

Wie im Beispiel 1 war von Hand weder eine Ablösung der PA12-Schicht noch der PP-Schicht vom Compound möglich. Bei hoher Gewaltanwendung versagte der Verbund stattdessen durch Materialbruch im Compound.

## Patentansprüche

1. Mehrschichtverbund, der folgende unmittelbar miteinander verbundene Schichten enthält:
I. Eine Schicht I aus einer Polyamid-Formmasse;
II. eine Schicht II aus einem Haftvermittler, der zu mindestens 50 Gew.-% aus einer Mischung besteht von
a) 30 bis 70 Vol.-Teilen von Polymeren, ausgewählt aus
- einem Polyamid und
- einem Polyamin-Polyamid-Copolymer, das unter Verwendung folgender Monomere hergestellt wird:
α) 0,1 bis 25 Gew.-%, bezogen auf das Polyamin-Polyamid-Copolymer, eines Polyamins mit mindestens 3 Stickstoffatomen sowie
β) polyamidbildende Monomere, ausgewählt aus Lactamen, ω-Aminocarbonsäuren und/oder äquimolaren Kombinationen von Diaminen und Dicarbonsäuren,
b) 0,1 bis 70 Vol.-Teilen eines Olefinpolymeren, das funktionelle Gruppen enthält,
c) 69,9 bis 0 Vol.-Teilen eines unfunktionalisierten Polyolefins,
wobei die Summe der Volumenteile von a), b) und c) 100 ergibt;
III. eine Schicht III aus einer Polyolefin-Formmasse.

2. Mehrschichtverbund gemäß Anspruch 1,
**dadurch gekennzeichnet,**
**dass** die Komponente II.a) mindestens 0,1 Volumenteile des Polyamin-Polyamid-Copolymers enthält.

3. Mehrschichtverbund gemäß Anspruch 1,
**dadurch gekennzeichnet,**
**dass** die Komponente II.a) mindestens 0,5 Volumenteile des Polyamin-Polyamid-Copolymers enthält.

4. Mehrschichtverbund gemäß einem der vorhergehenden Ansprüche,
**dadurch gekennzeichnet,**
**dass** das Polyamin-Polyamid-Copolymer unter Verwendung von 0,5 bis 20 Gew.-% des Polyamins hergestellt wird.

5. Mehrschichtverbund gemäß einem der vorhergehenden Ansprüche,
**dadurch gekennzeichnet,**
**dass** das Polyamin-Polyamid-Copolymer unter Verwendung von 1 bis 16 Gew.-% des Polyamins hergestellt wird.

6. Mehrschichtverbund gemäß einem der vorhergehenden Ansprüche,
**dadurch gekennzeichnet,**
**dass** das Polyamin mindestens 4 Stickstoffatome enthält.

7. Mehrschichtverbund gemäß einem der vorhergehenden Ansprüche,
**dadurch gekennzeichnet,**
**dass** das Polyamin mindestens 8 Stickstoffatome enthält.

8. Mehrschichtverbund gemäß einem der vorhergehenden Ansprüche,
**dadurch gekennzeichnet,**
**dass** das Polyamin mindestens 11 Stickstoffatome enthält.

9. Mehrschichtverbund gemäß einem der vorhergehenden Ansprüche,
**dadurch gekennzeichnet,**
**dass** das Polyamin ein zahlenmittleres Molekulargewicht Mₙ von mindestens 146 g/mol besitzt.

10. Mehrschichtverbund gemäß einem der vorhergehenden Ansprüche,
**dadurch gekennzeichnet,**
**dass** das Polyamin ein zahlenmittleres Molekulargewicht von Mₙ von mindestens 500 g/mol besitzt.

11. Mehrschichtverbund gemäß einem der vorhergehenden Ansprüche,
**dadurch gekennzeichnet,**
**dass** das Polyamin ein zahlenmittleres Molekulargewicht Mₙ von mindestens 800 g/mol besitzt.

12. Mehrschichtverbund gemäß einem der vorhergehenden Ansprüche,
**dadurch gekennzeichnet,**
**dass** die Aminogruppenkonzentration des Polyamin-Polyamid-Copolymers im Bereich von 100 bis 2500 mmol/kg liegt.

13. Mehrschichtverbund gemäß einem der vorhergehenden Ansprüche,
**dadurch gekennzeichnet,**
**dass** die funktionellen Gruppen des Olefinpolymeren Säureanhydridgruppen, N-Acyllactamgruppen, Carbonsäuregruppen, Epoxidgruppen, Oxazolingruppen, Trialkoxysilangruppen oder Hydroxylgruppen sind.

14. Mehrschichtverbund gemäß einem der vorhergehenden Ansprüche,
**dadurch gekennzeichnet,**
**dass** eine der Schichten oder eine zusätzliche Innenschicht elektrisch leitfähig ausgerüstet ist.

15. Mehrschichtverbund gemäß einem der vorhergehenden Ansprüche,
**dadurch gekennzeichnet,**
**dass** er ein Rohr ist.

16. Mehrschichtverbund gemäß Anspruch 15,
**dadurch gekennzeichnet,**
**dass** er vollständig oder in Teilbereichen gewellt ist.

17. Mehrschichtverbund gemäß einem der Ansprüche 1 bis 14,
**dadurch gekennzeichnet,**
**dass** er ein Hohlkörper ist.

18. Mehrschichtverbund gemäß einem der Ansprüche 15 bis 17,
**dadurch gekennzeichnet,**
**dass** sich an die äußerste Schicht noch eine Elastomerschicht anschließt.

19. Mehrschichtverbund gemäß einem der Ansprüche 1 bis 18,
**dadurch gekennzeichnet,**
**dass** er eine Kraftstoffleitung, ein Tankeinfüllstutzen, eine Vapor Line, eine Tankstellenleitung, eine Kühlflüssigkeitsleitung, eine Klimaanlagenleitung, eine Kupplungsleitung, eine Druckluftbremsleitung, eine Scheibenwaschanlagenleitung oder ein Kraftstoffbehälter ist.

20. Mehrschichtverbund gemäß einem der Ansprüche 1 bis 14,
**dadurch gekennzeichnet,**
**dass** er eine Folie ist.

21. Formmasse, die zu mindestens 50 Gew.-% folgende Komponenten enthält:
a) 30 bis 70 Vol.-Teile von Polymeren, die sich zusammensetzen aus
- einem Polyamid und
- mindestens 0,1 Vol.-Teilen eines Polyamin-Polyamid-Copolymers, das unter Verwendung folgender Monomere hergestellt wird:
α) 0,1 bis 25 Gew.-%, bezogen auf das Polyamin-Polyamid-Copolymer, eines Polyamins mit mindestens 3 Stickstoffatomen sowie
β) polyamidbildende Monomere, ausgewählt aus Lactamen, ω-Aminocarbonsäuren und/oder äquimolaren Kombinationen von Diamin und Dicarbonsäuren,
b) 0,1 bis 70 Vol.-Teilen eines Olefinpolymeren, das funktionelle Gruppen enthält,
c) 69,9 bis 0 Vol.-Teilen eines unfunktionalisierten Polyolefins,
wobei die Summe der Volumenteile von a), b) und c) 100 ergibt.

## Claims

1. A multilayer composite which comprises the following layers bound directly to one another:
I. a layer I of a polyamide moulding composition;
II. a layer II of a bonding agent comprising at least 50% by weight of a mixture of
a) from 30 to 70 parts by volume of polymers selected from among
- polyamides and
- polyamine-polyamide copolymers prepared using the following monomers:
α) from 0.1 to 25% by weight, based on the polyamine-polyamide copolymer, of a polyamine containing at least 3 nitrogen atoms, and
β) polyamide-forming monomers selected from among lactams, ω-aminocarboxylic acids and/or equimolar combinations of diamines and dicarboxylic acids,
b) from 0.1 to 70 parts by volume of an olefin polymer containing functional groups,
c) from 69.9 to 0 parts by volume of an unfunctionalized polyolefin,
where the sum of the parts by volume of a), b) and c) is 100;
III. a layer III of a polyolefin moulding composition.

2. A multilayer composite according to claim 1, **characterized in that** the component II.a) contains at least 0.1 part by volume of the polyamine-polyamide copolymer.

3. A multilayer composite according to claim 1, **characterized in that** the component II.a) contains at least 0.5 part by volume of the polyamine-polyamide copolymer.

4. A multilayer composite according to any one of the preceding claims, **characterized in that** the polyamine-polyamide copolymer is prepared using from 0.5 to 20% by weight of the polyamine.

5. A multilayer composite according to any one of the preceding claims, **characterized in that** the polyamine-polyamide copolymer is prepared using from 1 to 16% by weight of the polyamine.

6. A multilayer composite according to any one of the preceding claims, **characterized in that** the polyamine contains at least 4 nitrogen atoms.

7. A multilayer composite according to any one of the preceding claims, **characterized in that** the polyamine contains at least 8 nitrogen atoms.

8. A multilayer composite according to any one of the preceding claims, **characterized in that** the polyamine contains at least 11 nitrogen atoms.

9. A multilayer composite according to any one of the preceding claims, **characterized in that** the polyamine has a number average molecular weight Mₙ of at least 146 g/mol.

10. A multilayer composite according to any one of the preceding claims, **characterized in that** the polyamine has a number average molecular weight Mₙ of at least 500 g/mol.

11. A multilayer composite according to any one of the preceding claims, **characterized in that** the polyamine has a number average molecular weight Mₙ of at least 800 g/ml.

12. A multilayer composite according to any one of the preceding claims, **characterized in that** the amino group concentration of the polyamine-polyamide copolymer is in the range from 100 to 2500 mmol/kg.

13. A multilayer composite according to any one of the preceding claims, **characterized in that** the functional groups of the olefin polymer are acid anhydride groups, N-acyllactam groups, carboxylic acid groups, epoxide groups, oxazoline groups, trialkoxysilane groups or hydroxyl groups.

14. A multilayer composite according to any one of the preceding claims, **characterized in that** one of the layers or an additional interior layer has been made electrically conductive.

15. A multilayer composite according to any one of the preceding claims, **characterized in that** it is in the form of a pipe.

16. A multilayer composite according to claim 15, **characterized in that** it is fully corrugated or corrugated only in some regions.

17. A multilayer composite according to any one of claims 1 to 14, **characterized in that** it is in the form of a hollow body.

18. A multilayer composite according to any one of claims 15 to 17, **characterized in that** the outermost layer is adjoined by an additional elastomer layer.

19. A multilayer composite according to any one of claims 1 to 18, **characterized in that** it is in the form of a fuel line, a tank filling port, a vapour line, a filling station pipe, a coolant line, a pipe in an air conditioning unit, a line for clutch fluid, an air brake line, a windshield washer pipe or a fuel container.

20. A multilayer composite according to any one of claims 1 to 14, **characterized in that** it is in the form of a film.

21. A moulding composition comprising at least 50% by weight of the following components:
a) from 30 to 70 parts by volume of polymers selected from among
- polyamides and
- at least 0.1 part by volume of polyamine-polyamide copolymers prepared using the following monomers:
α) from 0.1 to 25% by weight, based on the polyamine-polyamide copolymer, of a polyamine containing at least 3 nitrogen atoms, and
β) polyamide-forming monomers selected from among lactams, ω-aminocarboxylic acids and/or equimolar combinations of diamines and dicarboxylic acids,
b) from 0.1 to 70 parts by volume of an olefin polymer containing functional groups,
c) from 69.9 to 0 parts by volume of an unfunctionalized polyolefin,
where the sum of the parts by volume of a), b) and c) is 100.

## Revendications

1. Produit composite multicouches qui contient des couches assemblées les unes aux autres directement, suivantes :
I) une couche I à base d'une masse moulée en polyamide,
II) une couche II à base d'un adjuvant d'adhésion qui consiste pour au moins 50 % en poids d'un mélange de
a) 30 à 70 % parties en volume de polymères choisis parmi
- un polyamide et
- un copolymère polyamine-polyamide qui est produit en utilisant les monomères suivants :
α) de 0,1 à 25 % en poids, rapporté au copolymère polyamine-polyamide, d'une polyamine ayant au moins 3 atomes d'azote ainsi que,
β) des monomères formateurs de polyamide choisis parmi les lactames, les acides ω-aminocarboxyliques et/ou les combi naisons équimolaires de diamines et d'acides dicarboxyli ques,
b) de 0,1 à 70 parties en volume d'un polymère d'oléfine qui renferme des groupes fonctionnels,
c) de 69,9 à 0 parties en volume d'une polyoléfine non fonctionnalisée,
la somme des parties en volume de a), b) et c) étant 100,
III) une couche III à base d'une masse moulée de polyoléfine.

2. Assemblage à plusieurs couches conformément à la revendication 1,
**caractérisé en ce que**
le composant II.a) renferme au moins 0,1 partie en volume de copolymère polyamine-polyamide.

3. Assemblage à plusieurs couches conformément à la revendication 1,
**caractérisé en ce que**
le composant II.a) renferme au moins 0,5 partie en volume de copolymère polyamine-polyamide.

4. Assemblage à plusieurs couches conformément à l'une quelconque des revendications précédentes,
**caractérisé en ce que**
le copolymère polyamine-polyamide est produit en utilisant de 0,5 à 20 % en poids de polyamine.

5. Assemblage à plusieurs couches conformément à l'une quelconque des revendications précédentes,
**caractérisé en ce que**
le copolymère polyamine/polyamide est produit en utilisant de 1 à 16 % en poids de polyamine.

6. Assemblage à plusieurs couches conformément à l'une quelconque des revendications précédentes,
**caractérisé en ce que**
la polyamine contient au moins 4 atomes d'azote.

7. Assemblage à plusieurs couches conformément à l'une quelconque des revendications précédentes,
**caractérisé en ce que**
la polyamine contient au moins 8 atomes d'azote.

8. Assemblage à plusieurs couches conformément à l'une quelconque des revendications précédentes,
**caractérisé en ce que**
la polyamine contient au moins 11 atomes d'azote.

9. Assemblage à plusieurs couches conformément à l'une quelconque des revendications précédentes,
**caractérisé en ce que**
la polyamine possède un poids moléculaire moyen numérique Mn d'au moins 146 g/mol.

10. Assemblage à plusieurs couches conformément à l'une quelconque
des revendications précédentes,
**caractérisé en ce que**
la polyamine possède un poids moléculaire moyen Mn d'au moins 500 g/mol.

11. Assemblage à plusieurs couches conformément à l'une quelconque des revendications précédentes,
**caractérisé en ce que**
la polyamine possède un poids moléculaire moyen numérique Mn d'au moins 800 g/mol.

12. Assemblage à plusieurs couches conformément à l'une quelconque des revendications précédentes,
**caractérisé en ce que**
la concentration en groupes amine du copolymère polyamine/polyamide se situe dans la zone de 100 à 2500 mmol/kg.

13. Assemblage à plusieurs couches conformément à l'une quelconque des revendications précédentes,
**caractérisé en ce que**
les groupes fonctionnels des polymères oléfiniques sont des groupes anhydride d'acide, des groupes N-acyllactame, des groupes acide carboxylique, des groupes epoxyde, des groupes oxazoline, des groupes trialkoxysilane, ou des groupes hydroxyle.

14. Assemblage à plusieurs couches conformément à l'une quelconque des revendications précédentes,
**caractérisé en ce qu'**
une des couches ou une couche interne additionnelle est équipée d'une manière conductrice de l'électricité.

15. Assemblage à plusieurs couches conformément à l'une quelconque des revendications précédentes,
**caractérisé en ce qu'**
il est un tube.

16. Assemblage à plusieurs couches conformément à la revendication 15,
**caractérisé en ce qu'**
il est complètement ou partiellement ondulé.

17. Assemblage à plusieurs couches conformément à l'une quelconque des revendications 1 à 14,
**caractérisé en ce qu'**
il est un corps creux.

18. Assemblage à plusieurs couches conformément à l'une quelconque des revendications 15 à 17,
**caractérisé en ce qu'**
encore une couche d'élastomère se connecte à la couche la plus extérieure.

19. Assemblage à plusieurs couches conformément à l'une quelconque des revendications 1 à 18,
**caractérisé en ce qu'**
il consiste en une conduite de carburant, un support de remplissage de réservoir, une « Vapor Line », une conduite de station d'essence, une conduite de liquide de refroidissement, une conduite d'installation de climatisation, une conduite de couplage, une conduite de frein à air comprimé, une conduite d'installation de lavage de vitres, ou un récipient pour carburant.

20. Assemblage à plusieurs couches conformément à l'une quelconque des revendications 1 à 14,
**caractérisé en ce qu'**
il est une feuille.

21. Masse moulée qui contient pour au moins 50 % en poids des composants suivants :
a) 30 à 70 % parties en volume de polymères choisis parmi
- un polyamide et
- un copolymère polyamine-polyamide qui est produit en utilisant les monomères suivants :
α) de 0,1 à 25 % en poids, rapporté au copolymère polyamine-polyamide, d'une polyamine ayant au moins 3 atomes d'azote ainsi que,
β) des monomères formateurs de polyamide choisis parmi les lactames, les acides ω-aminocarboxyliques et/ou les combinaisons équimolaires de diamines et d'acides dicarboxyliques,
b) de 0,1 à 70 parties en volume d'un polymère d'oléfine qui contient des groupes fonctionnels,
c) de 69,9 à 0 parties en volume d'une polyoléfine non fonctionnalisée, la somme des parties en volume de a) de b) et de c) faisant 100.
